# EUROPÄISCHE PATENTSCHRIFT

(11) **EP 1 508 037 B1**
(45) Veröffentlichungstag und Bekanntmachung des Hinweises auf die Patenterteilung: **21.06.2006**
(21) Anmeldenummer: 03735303.4
(22) Anmeldetag: 13.05.2003
(51) Int. Cl.: G01N 29/07

(54) **VERFAHREN ZUM FESTLEGEN DER ZEITLICHEN UND AMPLITUDENMÄSSIGEN GRENZWERTE VON BLENDEN BEI DER ULTRASCHALLPRÜFUNG VON PUNKTSCHWEISSVERBINDUNGEN**
METHOD FOR DETERMINING TEMPORAL AND AMPLITUDE THRESHOLD VALUES OF SCREENS DURING ULTRASOUND TESTING OF SPOT WELDING JOINTS
PROCEDE POUR DETERMINER LES VALEURS LIMITES DE CRENEAUX EN TERMES DE TEMPS ET D'AMPLITUDE LORS DU CONTROLE PAR ULTRASONS DE SOUDURES PAR POINTS

(30) Priorität: 17.05.2002 DE 10222600
(43) Veröffentlichungstag der Anmeldung: 23.02.2005
(73) Patentinhaber: Agfa NDT GmbH, D-50354 Hürth (DE)
(72) Erfinder: BUSCHKE, Paul, 50354 Hürth (DE); KIRCHNER, Bernd, 50374 Erftstadt (DE)
(74) Vertreter: Bauer, Wulf
(86) Internationale Anmeldenummer: PCT/DE2003/001545
(87) Internationale Veröffentlichungsnummer: WO 2003/098207

(56) Entgegenhaltungen:
- US-A- 4 208 917
- US-A- 5 537 875
- KRAUTKRAEMER J ET AL: "Werkstoffpruefung mit Ultraschall" WERKSTOFFPRUEFUNG MIT ULTRASCHALL, SPRINGER VERLAG, BERLIN, DE, 1980, Seiten 505-506, XP002206464
- KRAUTKRAMER: "State of the art in ultrasonic testing of spot welds" NDTNET, [Online] Bd. 3, Nr. 4, April 1998 (1998-04), Seiten 1-2, XP002206463 Gefunden im Internet: <URL:http://www.ndt.net/article/0498/spotw /spotw.htm> [gefunden am 2003-09-03]

## Beschreibung

Die Erfindung bezieht sich generell auf ein Verfahren zur Ultraschallprüfung einer Serie von Punktschweißverbindungen eines ausgewählten Typs und zielt auf eine Verbesserung innerhalb derartiger Prüfverfahren ab, nämlich auf ein Festlegen von Grenzwerten für Blenden, die eine Beurteilung ermöglichen, ob eine Schallankopplung gut oder schlecht ist. Die Erfindung beschäftigt sich vorrangig mit dem Festlegen von zeitlichen Grenzwerten und schlägt auch amplitudenmäßige Grenzwerte vor.

Verfahren zur Ultraschallprüfung von Punktschweißverbindungen sind allgemein bekannt, verwiesen wird hierzu auf US 4,208,917; US 4,265,119 und US 5,537,875.
Die bekannten Verfahren lassen sich unterteilen in Verfahren, bei denen die Ultraschallprüfung im wesentlichen gleichzeitig mit der Herstellung der Punktschweißverbindungen erfolgt und solchen Verfahren, bei denen eine hergestellte Punktschweißverbindung nachträglich mittels Ultraschall geprüft wird. Die Erfindung bezieht sich nur auf Verfahren der zweiten Art, also einer nachträglichen Prüfung.

Die Ultraschallprüfung von Punktschweißverbindungen basiert auf der Auswertung der Echofolge eines in die Punktschweißverbindung eingeschallten Ultraschallsignals, vorzugsweise eines Pulses. Typischerweise wird eine Folge von Pulsen eingeschallt. Es werden hochbedämpfte Sende-Empfangsköpfe eingesetzt, die üblicherweise Folienschwinger nutzen und eine Frequenz im Bereich typischerweise 15-20 MHz aufweisen. Die Wandlerdurchmesser liegen etwa im Bereich der Durchmesser der Punktschweißverbindungen. Die Ankopplung erfolgt typischerweise über einen Wasservorlauf, der häufig durch eine dünne Membrane nach außen dicht abgeschlossen ist. Dadurch vermeidet man einen unmittelbaren Kontakt des Wassers mit den Blechen.

Die Ultraschallprüfung von Punktschweißverbindungen erfolgt aktuell zumeist noch per Hand. Eine Automatisierung der Prüfung wird angestrebt. Die Erfindung soll sowohl die Prüfung per Hand vereinfachen als auch Wege für eine automatische Prüfung angeben.

Die Erfindung hat es sich zur Aufgabe gemacht, definierte Bedingungen anzugeben, die eine Beurteilung ermöglichen, ob eine Ankopplung eines Ultraschallprüfkopfes an eine konkrete Punktschweißverbindung ausreichend gut ist oder nicht.

Bei der praktischen Prüfung, sei sie per Hand oder mechanisch, wird der Prüfkopf sowohl gegenüber der Punktschweißverbindung verschoben als auch unterschiedlich orientiert. Ziel ist es, die bei einer guten Punktschweißverbindung erreichte Schweißlinse zwischen benachbarten Einzelblechen ausreichend zu erfassen und zu durchschallen. Eine optimale Ankopplung wird zwar angestrebt, muss aber nicht notwendigerweise erreicht werden. Eine gute Ankopplung bedeutet, dass die Echosignale so ausreichend deutlich groß sind, dass eine Auswertung, insbesondere Digitalisierung, möglich ist.

Gelöst wird die Aufgabe durch ein Verfahren zum Festlegen der Grenzwerte von Blenden, die eine Beurteilung einer guten Schallankopplung bei der Ultraschallprüfung einer Serie von Punktschweißverbindungen eines ausgewählten Typs ermöglichen, welche Punktschweißverbindungen zwischen mindestens einem ersten Blech und einem zweiten Blech ausgebildet sind, wobei das erste Blech eine erste Blechdicke und das zweite Blech eine zweite Blechdicke aufweist, bei welchem Verfahren, für die Punktschweißverbindung zunächst die geometrische Minimaldicke dMin festgelegt wird, wobei Minimaldicke kleiner ist als eine Gesamtblechdicke dT der durch die Punktschweißverbindung miteinander verbundenen Bleche, ein Ultraschallprüfkopf an eine zu prüfende Punktschweißverbindung angekoppelt wird, mindestens ein Ultraschallpuls auf eine Vorderfläche der Punktschweißverbindung eingeschallt wird und dessen Echosignale empfangen werden, wobei zu den Echosignalen mindestens ein Echo von der Vorderfläche (Eintrittsecho), ein Echo der ersten Reflektion an einer Rückwand der Punktschweißverbindung (erstes Rückwandecho) und mindestens ein weiteres (n-tes) Rückwandecho empfangen werden, die Laufzeit tMin des Ultraschallpulses für den Weg von der Vorderfläche zur Rückwand und zur Vorderfläche zurück bei der Minimaldicke und ebenso die Laufzeit tT für die Gesamtblechdicke dT bestimmt werden, eine erste Blende B 1 für das Signal des ersten Rückwandechos gesetzt wird, die zum Zeitpunkt t1S = tE + tMin - tSA beginnt und zum Zeitpunkt t1T = tE + tT +tSE endet, wobei tSA und tSE kleine Sicherheitszugaben sind, eine n-te Blende für das n-te Rückwandecho festgesetzt wird, die beginnt zum Zeitpunkt tnS = TE + n * tMin - tSA und endet zum Zeitpunkt
tnT = tE + n * tT + tSE, und der Prüfkopf unterschiedlich angekoppelt wird, insbesondere hinsichtlich seines Einschallwinkels und/oder Einschallortes und dabei eine ausreichend große Amplitude des Signals des ersten Rückwandechos innerhalb der ersten Blende und vorzugsweise auch des Signals des n-ten Rückwandechos innerhalb der n-ten Blende angestrebt und das erreichte Maximum zur Auswertung benutzt, insbesondere abgespeichert wird.

Bei diesem Verfahren werden durch einen entsprechenden Fachmann, insbesondere einen Schweißtechniker, zunächst die Minimaldicke dMin vorgeben, die die Punktschweißverbindung haben soll. Beim Punktschweißen drücken sich die Elektroden auf beiden Seiten der Blechverbindung in einem gewissen Maße in die jeweiligen Bleche ein, dies führt zu einer Reduzierung der Wanddicke der Punktschweißverbindung. Entsprechend der Form der Elektroden, die meist ballig bzw. teilkugelig rund sind, sind auch die Elektrodeneindrücke gewölbt. Die Eindrücke an beiden Seiten der Blechverbindung können unterschiedlich sein, insbesondere unterschiedlich tief. Im allgemeinen sind die tiefsten Stellen der beiden Eindrücke einander direkt gegenüberliegend, es kann aber auch ein leichter Versatz auftreten. An der tiefsten Stelle der Eindrücke ist die Wanddicke am geringsten.

Die Minimaldicke dMin sollte nicht unterschritten werden, bei Unterschreitung besteht die Gefahr, dass die Bleche im Bereich der Punktschweißverbindung zu sehr mechanisch geschwächt sind. In vorteilhafter Weiterbildung wird auch eine Maximaldicke dMax festgelegt, sie liegt im allgemeinen in Nähe der Gesamtblechdicke. Ein etwas größerer Wert der Gesamtblechdicke als der Wert der Maximaldicke ist erwünscht und zeigt, dass tatsächlich ein Schweißen stattgefunden hat.

In Abhängigkeit von den für den ausgebildeten Typ von Punktschweißverbindung festgelegten Werten für Minimaldicke und Gesamtblechdicke werden nun die zeitlichen Grenzwerte für Blenden gesetzt. Es wird eine erste Blende für das erste Rückwandecho gesetzt und auf jeden Fall eine weitere Blende für ein weiteres Rückwandecho, insbesondere das zweite Rückwandecho. Vorzugsweise werden drei Blenden gesetzt, insbesondere für das erste, zweite und dritte Rückwandecho. Der Startzeitpunkt und der Endzeitpunkt für die jeweiligen Blenden ergibt sich nun aus dem Zeitpunkt des Eintrittsechos bezüglich der Minimallaufzeit bzw. Laufzeit für die Gesamtblechdicke. Es wird noch eine Zugabe gemacht, die Sicherheitszugabe genannt wird. Es kann nun die Ultraschallprüfung durchgeführt werden. Erfolgt sie per Hand erfolgt eine Anzeige auf einem Bildschirm. Auf diesem ist die Zeitachse t aufgetragen über den Spannungswerten, die die verstärkten Echosignale haben.

Verwendet man einen logarithmischen Verstärker, kann man das Eintrittsecho und die nachfolgenden Rückwandechosignale jeweils vollständig darstellen. Im allgemeinen wird aber ein linearer Verstärker benutzt. Dessen Verstärkungsbereich wird so eingestellt, dass die üblicherweise zu erwartenden ersten Rückwandechos den Bildschirm im wesentlichen ausfüllen, aber nicht aus dem Bildschirm herauslaufen. Dabei ist vorrausgesetzt, dass der Ausgangsspannungshub des Verstärkers 100 % Bildschirmhöhe entspricht. Bei einer derartigen Einstellung läuft das elektrische Signal des Eintrittsechos weit über den oberen Rand des Bildschirms hinaus, wird also nicht dargestellt. Im Gegensatz zum logarithmischen Verstärker ist es nun schwierig den Peak des Eintrittsignals zu finden. Es gibt mehrere Möglichkeiten, den Zeitpunkt des Eintrittsechos tE auch in diesem Fall festzusetzen als Mittelpunkt der Orte, an denen die Anstiegsflanke und die absteigende Flanke den oberen Bildschirmrand erreichen. Derartige Ansätze sind aber im allgemeinen noch zu ungenau und für eine Näherung geeignet. Eine genaue Bestimmung erhält man durch Rückrechnung. Der Abstand aufeinanderfolgender Rückwandechos stellt die tatsächliche Laufzeit ta dar. Rechnet man diese vom ersten Eintrittsecho zurück, findet man den tatsächlichen Zeitpunkt des Eintrittsechos tE.

Bei einer automatisierten Prüfung muss kein Bildschirm vorhanden sein. Innerhalb der Blenden werden die Maximalwerte der Echosignale gesucht und in Abhängigkeit hiervon wird der Prüfkopf automatisch bewegt, bis ausreichend große Amplituden vorliegen. Ebenso erfolgt dies bei der manuellen Prüfung.

Wenn in jeder Blende ein ausreichend großes Echosignal vorliegt, ist die gewählte Einstellung ausreichend gut und kann die Echosignalfolge weiterverarbeitet werden, insbesondere digitalisiert und abgespeichert werden.

In einer Verbesserung wird vorgeschlagen, innerhalb der Blende noch die Zeitpunkte anzuzeigen, die der Minimallaufzeit und der Maximallaufzeit und/oder der Laufzeit für die Gesamtblechdicke entsprechen.

Eine bevorzugte Weiterbildung stellt ein Verfahren dar, dass amplitudenmäßige Grenzwerte für die Blenden der Rückwandechos wie folgt gesetzt werden:
- oberer Grenzwert der Echosignalspannung des ersten Rückwandechos U1Max = 100 %,
- unterer Grenzwert der Echosignalspannung des ersten Rückwandechos U 1 Min = 70-90 %, vorzugsweise 80 %;
- oberer Grenzwert der Echosignalspannung des zweiten Rückwandechos U2Max = 90-100 %, vorzugsweise 98 %,
- unterer Grenzwert der Echosignalspannung des ersten Rückwandechos U2Min = 20-60 %, vorzugsweise 40 %;
- oberer Grenzwert der Echosignalspannung des drittes Rückwandechos U3Max = 80-100 %, vorzugsweise 90 % und
- unterer Grenzwert der Echosignalspannung des drittes Rückwandechos U3Min = 10-30 %, vorzugsweise 20 %.

Im allgemeinen klingen die Rückwandechos mit größer werdender Ordnung ab, man spricht von einer abklingenden Echofolge. Es gibt aber besondere Verläufe, bei denen das zweite Rückwandecho beispielsweise größer ist als das erste. Eine abklingende Echofolge lässt sich dadurch erklären, dass der Schallimpuls mit jedem Hin- und Herlauf geschwächt wird, allgemein beträgt die Schwächung in den Metallblechen, wie sie hier verwendet werden, ca. 6 dB/mm.

Wenn man die Blenden für die Rückwandechos nicht alle auf den selben oberen amplitudenmäßigen Grenzwert setzt, ist es einfacher, die optisch auf dem Bildschirm dargestellten Blenden voneinander zu unterscheiden. Die unteren amplitudenmäßigen Grenzwerte der einzelnen Blenden werden so gesetzt, dass noch ausreichend gute Echos für die Weiterverarbeitung vorliegen.

In einer bevorzugten Weiterbildung des Verfahrens werden die graphisch dargestellten Blenden und die Rückwandechos gleichen Rangs jeweils speziell und von einander unterschiedlich auf dem Bildschirm dargestellt, beispielsweise punktiert, strichpunktiert, durch Wellenlinien usw. Dadurch lässt sich eine bessere Zuordnung erreichen.

Für die Laufzeit tT kann die Maximallaufzeit tMax für die Gesamtblechdicke dT angesetzt werden.

In einer besonders bevorzugten Ausbildung wird die Blende für ein n-tes Rückwandecho und die zugehörigen Signale des n-ten Rückwandechos graphisch auf dem Bildschirm anders dargestellt als andere Rückwandechos, z.B. gestrichelt, punktiert, strichgepunktet usw.. Auf diese Weise erreicht man bei der manuellen Prüfung eine gute Zuordnung.

Ausführungsbeispiele der Erfindung werden im Folgenden unter Bezugnahme auf die Zeichnung näher erläutert und beschrieben. Diese Ausführungsbeispiele sind nicht einschränkend zu verstehen. In der Zeichnung zeigen:
- Fig.1:: eine prinzipielle Seitenansicht einer Punktschweißverbindung von zwei Blechen, gezeigt ist ein Zustand mit maximalem Elektrodeneindruck auf beiden Blechen, weiterhin sind unterschiedlich Ankopplungen symbolisiert,
- Fig. 2:: eine Darstellung wie Figur 1, jedoch nun für den Fall geringster Elektrodeneindrücke,
- Fig. 3:: ein typisches Bild eines Bildschirms, als sogenanntes A-Bild für die Echosignale einer geprüften Punktschweißverbindung und
- Fig. 4:: eine Darstellung ähnlich Figur 3, jedoch nunmehr schematisiert, um die Positionierung der Blenden erläutern zu können.

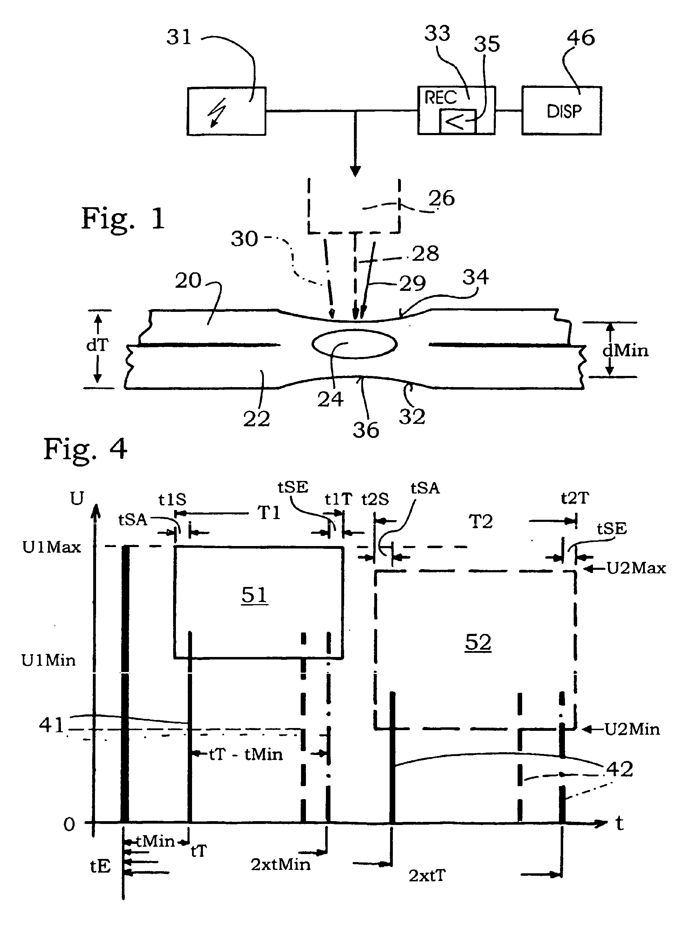

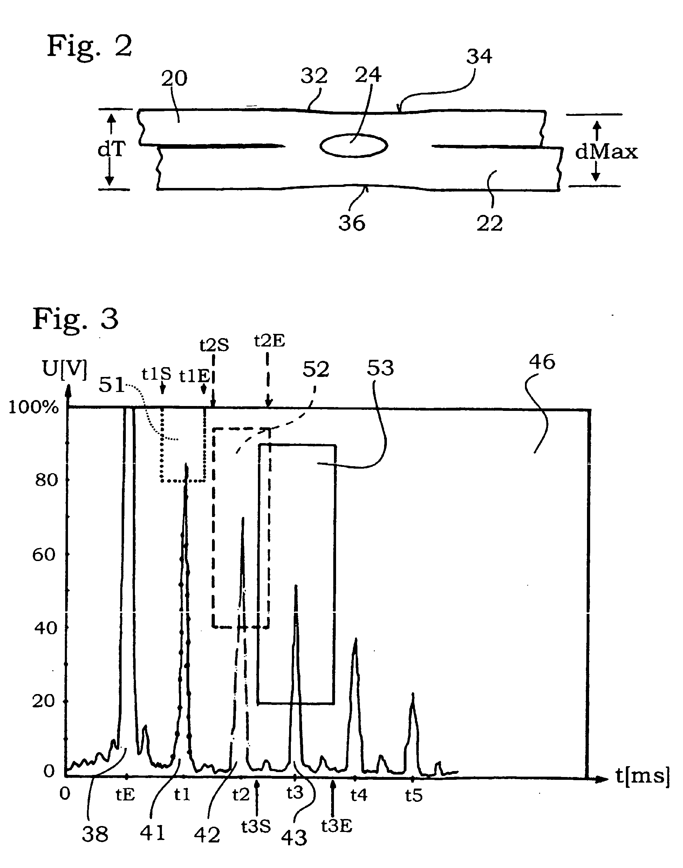

Figur 1 und 2 zeigen jeweils zwei Bleche 20, 22, die durch eine Punktschweißverbindung miteinander verbunden sind. Symbolisiert ist diese durch eine Schweißlinse 24. Die Bleche 20, 22 haben üblicherweise ein Dicke im Bereich mm, beispielsweise 0,6-1,2 mm. Typische Anwendungsfälle liegen im Bereich der Automobilindustrie. Die Punktschweißverbindungen sind jeweils unter den gleichen, bzw. möglichst gleichen Bedingungen entstanden, nämlich vergleichbare bzw. übereinstimmende Bleche 20, 22, vergleichbare Schweißvorgänge usw.. Die Schweißverbindungen stellen eine ausgewählten Typ dar.

Will man einen anderen Typ Schweißverbindungen prüfen, beispielweise andere Blechdicken usw. kann man ebenso vorgehen, wie nachfolgend beschrieben wird, man muss aber im allgemeinen andere Blendenwerte usw. setzen.

In den Ausführungsbeispielen ist die Verbindung zweier Bleche 20, 22 gezeigt, es können aber auch mehr als zwei Bleche miteinander verbunden sein. Die Gesamtdicke der miteinander verbundenen Bleche beträgt dT. Beim Schweissvorgang prägen sich die balligen Elektroden (nicht dargestellt, da bekannt) in die Oberfläche ein. Figur 1 zeigt den Fall der geringsten Blechdicke, der sogenannten Minimaldicke dMin, in Figur 2 ist der Fall der Maximaldicke dMax gezeigt.

Mittels eines Prüfkopfes 26, der hier nur schematisch angedeutet ist, da er an sich bekannt ist, wird ein Ultraschallimpuls in die zu prüfende Punktschweißverbindung eingeschallt. Dargestellt sind drei unterschiedliche Hauptstrahlen 28, 29, 30, die unterschiedlichen Orientierungen und Positionierungen des Prüfkopfes 26 entsprechen. Man erkennt, dass unterschiedliche Einschallungen zu unterschiedlichen Antworten führen werden. Der Prüfkopf 26 wird durch einen Sender 31 angeregt und ist mit einem Empfänger 33 verbunden, in dem sich ein Verstärker 35 befindet. Ein Bildschirm 46 ist nachgeschaltet.

Verwendet wird beispielsweise ein PVDF-Schwinger mit dem Durchmesser 4 mm und der Frequenz 20 MHz. Die Ankopplung erfolgt über eine Wasservorlaufstrecke und eine dünne Membran, die in Kontakt mit einem Blech im Bereich der Einprägung 32, die eine Schweißelektrode in bekannter Weise hervorgerufen hat. Im Bereich der Schweißlinse 24 beträgt der Durchmesser der Ultraschallstrahl z.B. etwa 2 mm bei minus 18 dB. Der Durchmesser des Schallstrahls ist im allgemeinen kleiner als der Durchmesser der Einprägung 32 bzw. als die Abmessung der Schweißlinse 24.

Ziel der Erfindung ist es, eine ausreichend gute Ankopplung zu finden, also innerhalb der möglichen Positionen und Orientierungen, wie sie durch die unterschiedlichen Hauptstrahlen 28, 29, 30 angedeutet sind, eine Ankopplung zu finden, die zu einer auswertbaren Echofolge führt, wie sie beispielsweise in Figur 3 dargestellt ist.

Figur 3 zeigt ein typisches Bild, wie es bei der manuellen Prüfung auf einem Bildschirm eines Ultraschallprüfgerätes mit linearem Verstärker erscheint. Der Nullpunkt für die Zeitachse ist beliebig gewählt, er sollte vor dem Zeitpunkt des Eintrittsechos tE sein, sodass dieses noch ausreichend erfassbar ist. Das Eintrittsecho, also die unmittelbare Reflektion eines Hauptstrahls 28, 29, 30 an der Vorderfläche 34, hat eine Amplitude, die deutlich über 100 % liegt. Die Verstärkung der Echosignale ist so eingestellt, dass innerhalb des Darstellungsbereichs ein erstes Rückwandecho 40 nahe an 100 % heranreicht, also ein möglichst großes Signal liefert.

Der Wert 100 %, also die speziell eingestellte Verstärkung zur Prüfung der Punktschweißverbindungen des ausgewählten Typs, wird aus einem Erfahrungswert abgeleitet, dieser kann auf unterschiedliche Weise gewonnen werden. So können beispielsweise einige Punktschweißverbindungen geprüft werden und für diese jeweils die notwendige Verstärkung notiert werden, die eine ausreichend große Anzeige des ersten Rückwandechos liefern. Mit diesem Erfahrungswert werden alle andere Punktschweißverbindungen des selben Typs geprüft.

Das erste Rückwandecho trifft zum Zeitpunkt t1 ein. Es sind noch weitere Rückwandechos gezeigt, die zu den Zeitpunkt t2, t3, t4 und t5 eintreffen. Die Ziffer bezeichnet jeweils den Rang des Rückwandechos. Man erkennt, dass eine sogenannte abklingende Echofolge vorliegt. Die Differenz zwischen aufeinanderfolgenden Echosignalen ist die tatsächliche Schalllaufzeit ta.

Bei der praktischen Prüfung wird der Prüfkopf 26 so lange bewegt und gekippt, bis eine ausreichend gute Echofolge vorliegt, also ausreichend gute Amplituden U für die Rückwandechos vorliegen. Um hier definierbare Verhältnisse zu schaffen, werden Blenden gesetzt. Figur 3 zeigt den Fall von drei Blenden, nämlich einer ersten Blende 51 für das erste Rückwandecho 41, einer zweiten Blende 52 für das zweite Rückwandecho 42 und einer dritten Blende 53 für das dritte Rückwandecho 43. Die Blenden werden auch als Signalerwartungswerte oder Fenster bezeichnet. Sie stellen selektierte Bereiche des Bildschirms 46 dar, auf die der Prüfer besonders achten soll. Entsprechendes gilt für die automatisierte Prüfung.

Die Blenden 51, 52, 53 sind jeweils durch zeitliche Grenzwerte in Richtung der Zeitachse t und durch amplitudenmäßige Grenzwerte in Richtung der y-Achse, auf der die Signalspannung U aufgetragen ist, begrenzt. Zu diesen Grenzen ist bereits oben ausführlich Stellung genommen worden. Konkret in Figur 3 ist die erste Blende 51 begrenzt durch die Zeitwerte t1S und t1T. Amplitudenmäßig ist die erste Blende 51 begrenzt durch eine obere Grenze U1Max bei 100 % und eine untere Grenze U1Min bei 80 %.

Die zweite Blende 52 ist in Richtung der Zeitachse etwas breiter, weil der Laufzeitunterschied zwischen Laufzeit der Gesamtblechdicke und Minimallaufzeit nun doppelt zu berücksichtigen ist. Die Blende beginnt zeitlich bei t2S und endet t2T. Amplitudenmäßig erstreckt sie sich von U2Max = 90 % bis herunter zu U2Min = 40 %.

Die dritte Blende 53 ist noch etwas breiter, sie beginnt bei t3S und endet bei t3T. Amplitudenmäßig erstreckt sie sich von U3Max = 80 % bis U3Min = 20%.

Wie Figur 3 zeigt, sind die Blenden und die zugehörigen Rückwandechos durch besondere Maßnahmen kenntlich gemacht, beispielsweise Punktierung bei der ersten Blende und Strichelung bei der zweiten Blende.

Figur 4 zeigt die Zusammenhänge. Die Rückwandechos 41-43 sind nun nur noch durch Striche dargestellt. Dargestellt ist in der Blende 51 das erste Rückwandecho 41 für den Fall der Minimaldicke der Schweißverbindung mit ausgezogenen Strichen, gestrichelt für den Fall der Maximaldicke und strichpunktiert für die Gesamtblechdicke dT. Zwischen diesen Grenzen sollten die normalen Fälle liegen. Die erste Blende 51 ist wie alle anderen Blenden jedoch noch etwas in Zeitrichtung größer, nämlich im Anfang durch den Sicherheitszuschlag tSA und am Ende durch den Sicherheitszuschlag tSE verlängert.

Gleiches gilt in der Blende 52 für das eingezeichnete zweite Rückwandecho mit den Alternativen ausgezogener Strich entspricht der Minimaldicke der Schweißverbindung gestrichelt entspricht der Maximaldicke und strichpunktiert entspricht der Gesamtblechdicke. Die Sicherheitszuschläge sind bei allen Blenden dieselben.

Die gestrichelt dargestellten Echos für die Maximaldicke dMax treffen zu folgenden Zeitpunkten ein: Erstes Rückwandecho 41 zum Zeitpunkt tE + tMax, zweites Rückwandecho 42 zum Zeitpunkt tE + 2 * tMax. Die erste Blende 51 erstreckt sich über die Gesamtzeit T1 = t1T - t1S. Die zeitliche Länge der zweiten Blende beträgt T2 = t2T - t2S.

## Patentansprüche

1. Verfahren zum Festlegen der Grenzwerte von Blenden, die eine Beurteilung einer guter Schallankopplung bei der Ultraschallprüfung einer Serie von Punktschweißverbindungen eines ausgewählten Typs ermöglichen, welche Punktschweißverbindungen zwischen mindestens einem ersten Blech (20) und einem zweiten Blech (22) ausgebildet sind, wobei das erste Blech (20) eine erste Blechdicke und das zweite Blech (22) eine zweite Blechdicke aufweist, bei welchem Verfahren,
a) für die Punktschweißverbindung zunächst eine geometrische Minimaldicke (dMin) festgelegt wird, wobei die Minimaldicke kleiner ist als eine Gesamtblechdicke (dT) der durch die Punktschweißverbindung miteinander verbundenen Bleche (20, 22),
b) ein Ultraschallprüfkopf (26) an eine zu prüfende Punktschweißverbindung angekoppelt wird, mindestens ein Ultraschallpuls auf eine Vorderfläche (34) der Punktschweißverbindung eingeschallt wird und dessen Echosignale empfangen werden, wobei zu den Echosignalen mindestens ein Echo (38) an der Vorderfläche (34), ein Echo der ersten Reflektion an einer Rückwand (36) der Punktschweißverbindung und mindestens ein weiteres (n-tes) Rückwandecho empfangen werden,
c) die Laufzeit (tMin) des Ultraschallpulses für den Weg von der Vorderfläche (34) zur Rückwand (36) und zur Vorderfläche (34) zurück bei der Minimaldicke dMin und ebenso die Laufzeit (tT) für die Gesamtblechdicke (dT) bestimmt wird,
d) eine erste Blende (51) B 1 für das Signal des ersten Rückwandechos gesetzt wird, die zum Zeitpunkt t1S = tE + tMin - tSA beginnt und zum Zeitpunkt t1T =tE + tT +tSE endet, wobei tSA und tSE kleine Sicherheitszugaben sind,
e) eine n-te Blende für das n-te Rückwandecho festgesetzt wird, die beginnt zum Zeitpunkt tnS = tE + n * tMin - tSA und endet zum Zeitpunkt tnT = tE + n * tT + tSE, und
f) der Prüfkopf (26) unterschiedlich angekoppelt wird insbesondere hinsichtlich seines Einschallwinkels und/oder Einschallortes und dabei eine ausreichend große Amplitude des Signals des ersten Rückwandechos innerhalb der ersten Blende und vorzugsweise auch des Signals des n-ten Rückwandechos innerhalb der n-ten Blende angestrebt und das erreichte Maximum zur Auswertung benutzt, insbesondere abgespeichert wird.

2. Verfahren nach Anspruch 1, **dadurch gekennzeichnet, dass** die Echosignale auf einem Bildschirm (46) dargestellt werden, auf dessen x-Achse die Zeit (t) dargestellt wird und auf dessen y-Achse das elektrische Echosignal (U) dargestellt wird.

3. Verfahren nach Anspruch 1 oder 2, **dadurch gekennzeichnet, dass** die empfangenen elektrischen Echosignale im wesentlichen linear verstärkt werden, dass ein Erfahrungswert für die Amplitude des Echosignals des ersten Rückwandechos ermittelt wird, beispielsweise durch Prüfung einer größeren Anzahl der Punktschweißverbindungen, und dass die Verstärkung so erfolgt, dass der Erfahrungswert innerhalb des Verstärkungsbereichs des Verstärkers (35) liegt und einen möglichst hohen, aber unter der maximalen Ausgangsspannung des Verstärkers (35) liegenden Wert hat.

4. Verfahren nach Anspruch 3, **dadurch gekennzeichnet, dass** der Verstärker (35) einen Verstärkungsbereich von 0 bis 100 % hat, dass amplitudenmäßige Grenzwerte für die Blenden der Rückwandechos wie folgt gesetzt werden:
- oberer Grenzwert der Echosignalspannung des ersten Rückwandechos U l max = 100 %,
- unterer Grenzwert der Echosignalspannung des ersten Rückwandechos U 1 Min = 70-90 %, vorzugsweise 80 %;
- oberer Grenzwert der Echosignalspannung des zweiten Rückwandechos U2Max = 90-100 %, vorzugsweise 98 %,
- unterer Grenzwert der Echosignalspannung des zweiten Rückwandechos U2Min = 20-60 %, vorzugsweise 40 %;
- oberer Grenzwert der Echosignalspannung des drittes Rückwandechos U3Max = 80-100 %, vorzugsweise 90 % und
- unterer Grenzwert der Echosignalspannung des drittes Rückwandechos U3Min = 10-30 %, vorzugsweise 20 %.

5. Verfahren nach Anspruch 1, **dadurch gekennzeichnet, dass** zwei, vorzugsweise drei Blenden (51, 52, 53) gesetzt werden.

6. Verfahren nach Anspruch 1, **dadurch gekennzeichnet, dass** die Blende für ein n-tes Rückwandecho und die zugehörigen Signale des n-ten Rückwandechos graphisch auf dem Bildschirm (46) anders dargestellt werden als andere Rückwandechos, z.B. gestrichelt, punktiert, strichgepunktet usw.

7. Verfahren nach Anspruch 1, **dadurch gekennzeichnet, dass** auch eine Maximaldicke (dMax) für die Punktschweissverbindung festgelegt wird.

8. Verfahren nach Anspruch 7, **dadurch gekennzeichnet, dass** der Zeitpunkt (tE) des Eintrittsechos wie folgt bestimmt wird:
a) es wird der Zeitpunkt des Maximums des ersten Rückwandechos (t1) ermittelt und hiervon der Mittelwert von maximaler Laufzeit (tMax) und Minimallaufzeit (tMin) abgezogen, das Ergebnis wird tEa genannt,
b) es wird der Zeitpunkt des Maximums des zweiten Rückwandechos t2 bestimmt und hiervon der zweifache Wert des Mittelwertes aus Maximallaufzeit und Minimallaufzeit abgezogen, das Ergebnis wird tEb genannt, und
c) der Mittelwert von tEa und tEb wird als tE, Zeitpunkt des Eintrittsechos angesetzt.

9. Verfahren nach Anspruch 1, **dadurch gekennzeichnet, dass** die Wanddicke (d)der Bleche (20, 22) kleiner als 12 mm ist und vorzugsweise im Bereich unterhalb 2, insbesondere unterhalb 1,2 mm liegt.

10. Verfahren nach Anspruch 2, **dadurch gekennzeichnet, dass** die Sicherheitszuschläge wie folgt angesetzt werden:
a) Sicherheitszuschlag am Anfang der Blende (tSA) wird angesetzt mit 10-60 %, vorzugsweise 50 % der Differenz aus der Schalllaufzeit (tT) für die Gesamtblechdicke (dT) und der Minimallaufzeit (tMin) und
b) Sicherheitszuschlag am Ende der Blende (tSE) wird gesetzt als 10-60 %, vorzugsweise 50% der Differenz aus der Schalllaufzeit für die Gesamtblechdicke (dT) und der Maximallaufzeit (tMax).

## Claims

1. A method for determining the threshold values of screens permitting to evaluate a good sound coupling during ultrasound testing of a series of spot welding joints of a selected type, said spot welding joints being configured between at least one first metal sheet (20) and one second metal sheet (22), the first sheet (20) having a first sheet thickness and the second metal sheet (22) a second sheet thickness, by which method
a) a geometrical minimum thickness (dMin) is first established for the spot welding joint, said minimum thickness being smaller than an overall sheet thickness (dT) of the metal sheets (20, 22) joined together with the spot welding joint,
b) an ultrasonic probe (26) is coupled to a spot welding joint to be tested, at least one ultrasound pulse is emitted onto a front surface (34) of the spot welding joint and its echo signals received, in addition to the echo signals, at least one echo (38) on the front surface (34), one echo of the first reflection on a rear wall (36) of the spot welding joint and at least one further (n^{th}) rear wall echo are received,
c) the propagation time (tMin) of the ultrasound pulse for the path from the front surface (34) to the rear wall (36) and back to the front surface (34) at the minimum thickness (dMin) as well as the propagation time (tT) for the overall sheet thickness (dT) is evaluated,
d) a first screen (51) B1 is set for the signal of the first rear wall echo that starts at the moment in time t1S = tE + tMin - tSA and ends at the moment in time t1T = tE + tT + tSE, with tSA and tSE being small safety allowances,
e) an n^{th} screen for the n^{th} rear wall echo is fixed that begins at the moment in time tnS = tE + n * tMin - tSA and ends at the moment in time tnT = tE + n * tT + tSE, and
f) the probe (26) is coupled in different ways, more specifically with regard to its emission angle and/or emission site thereby aiming at achieving a sufficiently large amplitude of the signal of the first rear wall echo within the first screen and preferably of the signal of the n^{th} rear wall echo within the n^{th} screen as well and the achieved maximum is used, more specifically stored, for evaluation.

2. The method in accordance with claim 1, **characterized in that** the echo signals are represented on a monitor (46) on the x-axis of which is plotted the time (t) and on the y-axis of which is plotted the electrical echo signal (U).

3. The method in accordance with claim 1 or 2, **characterized in that** the electrical echo signals received are substantially linearly amplified, that an experimental value for the amplitude of the echo signal of the first rear wall echo is determined, for example for testing a greater number of spot welding joints, and that amplification occurs in such a manner that the experimental value lies within the amplification range of the amplifier (35) and has a value as high as possible but below the maximum output voltage of the amplifier (35).

4. The method in accordance with claim 3, **characterized in that** the amplifier (35) has an amplification range of from 0 to 100 %, that amplitude threshold values for the screens of the rear wall echoes are set as follows:
- upper threshold value of the echo signal voltage of the first rear wall echo U1Max = 100 %,
- lower threshold value of the echo signal voltage of the first rear wall echo U1Min = 70-90 %, preferably 80 %;
- upper threshold value of the echo signal voltage of the second rear wall echo U2Max = 90-100 %, preferably 98 %,
- lower threshold value of the echo signal voltage of the second rear wall echo U2Min = 20-60 %, preferably 40 %;
- upper threshold value of the echo signal voltage of the third rear wall echo U3Max = 80-100 %, preferably 90 % and
- lower threshold value of the echo signal voltage of the third rear wall echo U3Min = 10-30 %, preferably 20 %.

5. The method in accordance with claim 1, **characterized in that** two, preferably three screens (51, 52, 53) are set.

6. The method in accordance with claim 1, **characterized in that** the screens for the n^{th} rear wall echo and the associated signals of the n^{th} rear wall echo are represented graphically on the monitor (46) in another manner than other rear wall echoes, for example in dashed line, in dotted line, in dash-dot line, and so on.

7. The method in accordance with claim 1, **characterized in that** a maximum thickness (dMax) for the spot welding joint is also established.

8. The method in accordance with claim 7, **characterized in that** the moment in time (tE) of the entrance echo is determined as follows:
a) the moment in time of the maximum of the first rear wall echo (t1) is established and the mean value of the maximum propagation time (tMax) and the minimum propagation time (tMin) is subtracted therefrom, the result obtained being called tEa,
b) the moment in time of the maximum of the second rear wall echo (t2) is determined and the double value of the mean value of maximum propagation time tMax and minimum propagation time tMin is subtracted therefrom, the result obtained being called tEb, and
c) the mean value of tEa and tEb is assessed as tE, which is the time of the entrance echo.

9. The method in accordance with claim 1, **characterized in that** the wall thickness (d) of the sheets (20, 22) is less than 12 mm and is preferably less than 2, more specifically less than 1.2 mm.

10. The method in accordance with claim 2, **characterized in that** the safety allowances are assessed as follows:
a) safety allowance at the beginning of the screen (tSA) is determined to be 10-60 %, preferably 50 %, of the difference between the sound propagation time (tT) for the overall sheet thickness (dT) and the minimum propagation time (tMin) and
b) safety allowance at the end of the screen (tSE) is set as 10-60 %, preferably 50 %, of the difference between the sound propagation time for the overall sheet thickness (dT) and the maximum propagation time (tMax).

## Revendications

1. Procédé pour déterminer les valeurs limites de créneaux qui permettent d'évaluer un bon couplage acoustique lors du contrôle par ultrasons d'une série de soudures par points d'un type sélectionné, lesdites soudures par points étant réalisées entre au moins une première tôle (20) et une deuxième tôle (22), la première tôle (20) présentant une première épaisseur de tôle et la deuxième tôle (22) présentant une deuxième épaisseur de tôle, dans ledit procédé
a) on détermine d'abord une épaisseur géométrique minimale (dMin) pour la soudure par points, ladite épaisseur minimale étant plus petite qu'une épaisseur totale (dT) des tôles (20, 22) reliées entre elles par la soudure par points,
b) un palpeur à ultrasons (26) est couplé à une soudure par points à contrôler, au moins une impulsion ultrasonore est émise sur la face avant (34) de la soudure par points et ses signaux d'écho son reçus, en plus des signaux d'écho étant reçus au moins un écho (38) sur la face avant (34), un écho de la première réflexion sur un fond (36) de la soudure par points et au moins un autre (n^{ième}) écho de fond,
c) on détermine le temps de propagation (tMin) de l'impulsion ultrasonore pour le parcours aller et retour entre la face avant (34) et le fond (36) avec l'épaisseur minimale (dMin), et de même le temps de propagation (tT) pour l'épaisseur totale de tôle (dT),
d) un premier créneau (51) B1 est établi pour le signal du premier écho de fond, lequel créneau débute au moment t1 S = tE + tMin - tSA et termine au moment t1 T = tE + tT + tSE, tSA et tSE étant de petites marges de sécurité,
e) un n^{ième} créneau est déterminé pour le n^{ième} écho de fond, lequel n^{ième} créneau débute au moment tnS = tE + n * tMin - tSA et termine au moment tnT = tE + n * tT + tSE, et
f) le palpeur (26) est couplé différemment, en particulier en ce qui concerne son angle d'irradiation acoustique et/ou son lieu d' irradiation acoustique, tout en visant à atteindre une amplitude suffisamment importante du signal du premier écho de fond à l'intérieur du premier créneau et, de préférence, également du signal du n^{ième} écho de fond à l'intérieur du n^{ième} créneau, et le maximum atteint est utilisé, en particulier mémorisé, pour l'évaluation.

2. Procédé selon la revendication 1, **caractérisé par le fait que** les signaux d'écho sont visualisés sur un écran (46) sur l'axe x duquel est représenté le temps (t) et sur l'axe y duquel est représenté le signal électrique d'écho (U).

3. Procédé selon la revendication 1 ou 2, **caractérisé par le fait que** les signaux d'écho électriques reçus sont pour l'essentiel amplifiés linéairement, qu'une valeur empirique pour l'amplitude du signal d'écho du premier écho de fond est déterminée, par exemple en examinant un nombre plus grand des soudures par points, et que l'amplification est effectuée de telle manière que la valeur empirique est située à l'intérieur de la gamme d'amplification de l'amplificateur (35) et a une valeur aussi élevée que possible, mais inférieure à la tension maximale de sortie de l'amplificateur (35).

4. Procédé selon la revendication 3, **caractérisé par le fait que** ledit amplificateur (35) a une gamme d'amplification de 0 à 100 %, que des valeurs limites en terme d'amplitude pour les créneaux des échos de fond sont établies comme suit :
- valeur limite supérieure de la tension de signal d'écho du premier écho de fond U1Max = 100 % ;
- valeur limite inférieure de la tension de signal d'écho du premier écho de fond U1Min = 70 à 90 %, de préférence 80 % ;
- valeur limite supérieure de la tension de signal d'écho du deuxième écho de fond U2Max = 90 à 100 %, de préférence 98 % ;
- valeur limite inférieure de la tension de signal d'écho du deuxième écho de fond U2Min = 20 à 60 %, de préférence 40 % ;
- valeur limite supérieure de la tension de signal d'écho du troisième écho de fond U3Max = 80 à 100 %, de préférence 90 % , et
- valeur limite inférieure de la tension de signal d'écho du troisième écho de fond U3Min = 10 à 30 %, de préférence 20 %.

5. Procédé selon la revendication 1, **caractérisé par le fait que** l'on établit deux, de préférence trois créneaux (51, 52, 53).

6. Procédé selon la revendication 1, **caractérisé par le fait que** le créneau pour un n^{ième} écho de fond et les signaux associés du n^{ième} écho de fond sont représentés graphiquement sur l'écran (46) d'une autre manière que d'autres échos de fond, par exemple en traits interrompus, de façon pointillée, en traits et points etc.

7. Procédé selon la revendication 1, **caractérisé par le fait que** l'on détermine également une épaisseur maximale (dMax) pour la soudure par points.

8. Procédé selon la revendication 7, **caractérisé par le fait que** le moment (tE) de l'écho d'entrée est déterminé comme suit :
a) on détermine le moment du maximum du premier écho de fond (t1) et on en soustrait la valeur moyenne du temps maximal de propagation (tMax) et du temps minimal de propagation (tMin), le résultat obtenu étant qualifié de tEa,
b) on détermine le moment du maximum du deuxième écho de fond t2 et on en soustrait la double valeur de la valeur moyenne du temps maximal de propagation et du temps minimal de propagation, le résultat obtenu étant qualifié de tEb, et
c) la valeur moyenne de tEa et de tEb est prise comme tE qui est le moment de l'écho d'entrée.

9. Procédé selon la revendication 1, **caractérisé par le fait que** l'épaisseur de paroi (d) des tôles (20, 22) est inférieure à 12 mm, et, de préférence, elle est inférieure à 2, en particulier inférieure à 1,2 mm.

10. Procédé selon la revendication 2, **caractérisé par le fait que** lesdites marges de sécurité sont déterminées comme suit :
a) la marge de sécurité au début du créneau (tSA) est déterminée comme étant comprise entre 10 et 60 %, de préférence 50 % de la différence entre le temps de propagation acoustique (tT) pour l'épaisseur totale de tôle (dT) et le temps minimal de propagation (tMin), et
b) la marge de sécurité à la fin du créneau (tSE) est déterminée comme étant comprise entre 10 et 60 %, de préférence 50 % de la différence entre le temps de propagation acoustique pour l'épaisseur totale de tôle (dT) et le temps maximal de propagation (tMax).
